# EUROPÄISCHE PATENTANMELDUNG

(11) **EP 4 074 745 A1**
(43) Veröffentlichungstag der Anmeldung: **19.10.2022**
(21) Anmeldenummer: 21168924.5
(22) Anmeldetag: 16.04.2021
(51) Int. Cl.: C08G 18/32, C08G 18/78, C09D 5/08, C08G 18/40, C08G 18/42, C08G 18/62, C08G 18/65, C09D 175/00

(54) **KORROSIONSSCHUTZ-BESCHICHTUNG AUF POLYURETHAN-BASIS**

(71) Anmelder: Sherwin-Williams Coatings Deutschland GmbH, 42389 Wuppertal (DE)
(72) Erfinder: ZUERNER, Andreas, 75223 Niefen-Öschelbronn (DE); BAUER, Lea-Marie, 71701 Schwieberdingen (DE); HÄBERLE, Hans, 78262 Gailingen (DE); GRÖTZINGER, Jochen, 73525 Schwäbisch Gmünd (DE)
(74) Vertreter: Vossius & Partner Patentanwälte Rechtsanwälte mbB

(57) **Zusammenfassung**

Gegenstand der Erfindung ist eine Korrosionsschutz-Beschichtung umfassend mindestens ein Polyisocyanat, mindestens ein Polyol P1 mit einer OH-Zahl im Bereich von 60 bis 300 mg KOH/g, mindestens ein Aldimin der Formel (I) und mindestens ein Korrosionsschutz-Pigment.

Die Korrosionsschutz-Beschichtung ermöglicht die Applikation in hohen Schichtdicken im Bereich von 240 bis 500 µm Trockenschichtdicke und mehr pro Arbeitsgang, ohne dass bei feuchtwarmen Klimabedingungen Qualitätseinbussen auftreten. Sie ermöglicht somit einen ausgezeichneten und besonders lang anhaltenden Schutz von stark belasteten Stahlbauten.

## Beschreibung

### Technisches Gebiet

Die Erfindung betrifft Korrosionsschutz-Beschichtungen auf Polyurethan-Basis, welche in hoher Schichtdicke applizierbar sind.

### Stand der Technik

Korrosionsschutz-Beschichtungen auf Polyurethan-Basis sind bekannt. Sie schützen Metalloberflächen vor Korrosion und werden insbesondere dort eingesetzt, wo aufgrund von Vibrationen und/oder Temperaturschwankungen eine hohe Flexibilität der Beschichtung erforderlich ist, beispielsweise für den Schutz von Stahlbauten im Strassenbau.
Üblicherweise werden Korrosionsschutz-Beschichtungen in Schichtdicken von etwa 80 µm Trockenschichtdicke pro Arbeitsgang appliziert. Für eine besonders hohe und langlebige Schutzwirkung, wie sie beispielsweise vom deutschen Bundesamt für Strassenwesen in Blatt 100 mit Garantien für 50 Jahre Lebensdauer gefordert wird, sind aber wesentlich höhere Schichtdicken erforderlich. Die maximale Schichtdicke, die pro Arbeitsgang appliziert werden kann, ist für Korrosionsschutz-Beschichtungen auf Polyurethan-Basis limitiert durch den Lösemittelgehalt und somit den Schwund der Beschichtung, sowie durch das Auftreten von Blasen bis zu Schaumbildung bei der Aushärtung, vor allem bei feuchtwarmen Klimabedingungen, was eine stark reduzierte Festigkeit der ausgehärteten Beschichtung zur Folge hat. Um hohe Trockenschichtdicken von 240 bis 500 µm und mehr zu erreichen, sind mit den aus dem Stand der Technik bekannten Korrosionsschutz-Beschichtungen auf Polyurethan-Basis 3 bis 6 Arbeitsgänge nötig, was einen extrem hohen Zeit- und Arbeitsaufwand bedeutet. Es besteht deshalb ein Bedarf nach Korrosionsschutz-Beschichtungen auf Polyurethan-Basis, welche in hohen Schichtdicken von 240 µm Trockenschichtdicke und mehr pro Arbeitsgang in einem breiten Anwendungsfenster appliziert werden können, ohne dass Qualitätseinbussen bei der Aushärtung entstehen.
Polyurethan-Beschichtungen enthaltend Aldimine abgeleitet von Isobutyraldehyd sind bekannt, beispielsweise aus EP 531,249 oder EP 959,086. Die beschriebenen Beschichtungen sind nicht geeignet für den Korrosionsschutz, und die offenbarten Aldimine verursachen einen intensiven, unangenehmen Geruch und tragen zu einem hohen Schwund bei der Aushärtung bei.
US 8,252,859 beschreibt Aldimine abgeleitet von 2,2-Dimethyl-3-(N-morpholino)-propanal und ihr Einsatz in einkomponentigen, hochflexiblen Polyurethan-Dicht- und Klebstoffen. Erwähnt ist auch ein Einsatz in Beschichtungen, insbesondere Bodenbeschichtungen, welche aber nicht geeignet sind für den Korrosionsschutz.

### Darstellung der Erfindung

Aufgabe der vorliegenden Erfindung ist es daher, eine Polyurethan-Beschichtung zur Verfügung zu stellen, welche in hoher Schichtdicke in einem breiten Anwendungsfenster appliziert werden kann und einen hohen Korrosionsschutz auf Metallen gewährleistet.
Diese Aufgabe wird überraschenderweise mit einer Korrosionsschutz-Beschichtung wie in Anspruch 1 beschrieben gelöst. Die Kombination aus Polyisocyanat, speziellem Polyol, Aldimin der Formel (I) und Korrosionsschutz-Pigment ermöglicht die Applikation in hohen Schichtdicken von 240 bis 500 µm Trockenschichtdicke und mehr pro Arbeitsgang, ohne dass bei der Aushärtung Qualitätseinbussen auftreten, auch bei anspruchsvollen Klimabedingungen wie beispielsweise 30 °C / 80% relative Luftfeuchtigkeit. Dass Aldimine der Formel (I) die Bildung von Blasen in einkomponentigen Polyurethanprodukten unterdrücken können, ist zwar aus dem Stand der Technik bekannt. Dass sie aber geeignet sein könnten als Bestandteil von zweikomponentigen Korrosionsschutz-Beschichtungen, wo für einen guten Korrosionsschutz üblicherweise hohe Mengen an kurzkettigen Polyolen enthalten sind, ist äusserst überraschend und aus dem Stand der Technik nicht ersichtlich. Einerseits muss beim Einsatz von Aldiminen der Gehalt an Polyolen entsprechen reduziert werden, und andererseits verbleiben die aus den Aldiminen der Formel (I) bei der Aushärtung freigesetzten Aldehyde in der ausgehärteten Beschichtung, wobei erwartet werden konnte, dass diese Effekte einen negativen Einfluss auf die Korrosionsschutzeigenschaften der Beschichtung ausüben würden.

Die erfindungsgemässe Korrosionsschutz-Beschichtung ermöglicht einen ausgezeichneten und besonders langanhaltenden Schutz von Stahlbauten, welche mechanisch stark belastet sind. Die Korrosionsschutz-Beschichtung verfügt über einen sehr hohen Festkörpergehalt und entsprechend geringen Volumenschwund, härtet auch bei feuchtwarmen Klimabedingungen in hohen Schichtdicken schnell, störungsfrei und ohne unangenehme Geruchsbelästigungen aus und bildet dabei ebenmässige, weitgehend blasenfreie Beläge von hoher Härte und Haftkraft, hoher Witterungsstabilität und überraschend hoher Schutzwirkung von Metallen gegen Kondensationswasser und Salzsprühnebel. Dabei ist die ausgehärtete Oberfläche hervorragend kompatibel mit weiteren Beschichtungen und kann insbesondere mit sich selbst oder mit einer Vielzahl von handelsüblichen Topcoats unter Ausbildung einer guten Zwischenhaftung überbeschichtet werden.
Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine Korrosionsschutz-Beschichtung umfassend
- mindestens ein Polyisocyanat,
- mindestens ein Polyol P1 mit einer OH-Zahl im Bereich von 60 bis 300 mg KOH/g,
- mindestens ein Aldimin der Formel (I) 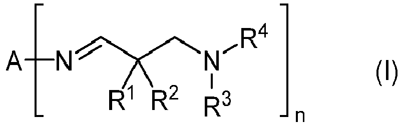 wobei
   n für 2 oder 3 steht,
   A für einen n-wertigen organischen Rest mit 2 bis 25 C-Atomen steht,
   R¹ und R² unabhängig voneinander für einen C₁ bis C₄ Alkylrest oder zusammen für einen C₄ bis C₆ Alkylenrest stehen, und
   R³ und R⁴ unabhängig voneinander für einen gegebenenfalls Ether-Sauerstoff enthaltenden C₁ bis C₈ Alkylrest oder zusammen für einen gegebenenfalls Ether-Sauerstoff enthaltenden C₄ bis C₆ Alkylenrest stehen,
- und mindestens ein Korrosionsschutz-Pigment.

Als "aliphatisch" wird ein Polyisocyanat mit ausschliesslich direkt an ein aliphatisches oder cycloaliphatisches C-Atom gebundenen Isocyanatgruppen bezeichnet. Mit "Poly" beginnende Substanznamen wie Polyisocyanat, Polyol oder Polyamin bezeichnen Substanzen, die formal zwei oder mehr der in ihrem Namen vorkommenden funktionellen Gruppen pro Molekül enthalten.
Als "NCO-Gehalt" wird der Gehalt an Isocyanatgruppen in Gewichts-% bezeichnet. Als "Korrosionsschutz-Pigment" werden bei Raumtemperatur feste Teilchen bezeichnet, die in der Korrosionsschutz-Beschichtung unlöslich sind und den Schutz vor Korrosion auf Metallen erhöhen.
Als "Molekulargewicht" wird die molare Masse (in Gramm pro Mol) eines Moleküls oder eines Molekül-Rests bezeichnet. Als "mittleres Molekulargewicht" wird das Zahlenmittel Mₙ einer polydispersen Mischung von oligomeren oder polymeren Molekülen oder Molekül-Resten bezeichnet. Es wird mittels Gelpermeationschromatographie (GPC) gegen Polystyrol als Standard bestimmt.
Als "Topfzeit" wird die Zeitspanne ab dem Mischen der Komponenten einer mehrkomponentigen härtbaren Zusammensetzung bezeichnet, innerhalb welcher die Zusammensetzung ohne Einbussen verarbeitet werden kann.
Als "Raumtemperatur" wird eine Temperatur von 23 °C bezeichnet.
Alle im Dokument erwähnten Industriestandards und Normen beziehen sich auf die zum Zeitpunkt der Einreichung der Erstanmeldung gültigen Fassungen. Gewichtsprozente (Gewichts-%), abgekürzt Gew.%, bezeichnen Massenanteile eines Bestandteils einer Zusammensetzung oder eines Polymers oder Moleküls, bezogen auf die gesamte Zusammensetzung oder das gesamte Polymer oder Molekül, falls nichts anderes angeben ist. Die Begriffe "Masse" und "Gewicht" werden im vorliegenden Dokument synonym benutzt.
Volumenprozente (Volumen-%), abgekürzt Vol.%, bezeichnen Volumenanteile eines Bestandteils einer Zusammensetzung bezogen auf die gesamte Zusammensetzung, falls nichts anderes angeben ist.

Bevorzugt umfasst die Korrosionsschutz-Beschichtung eine erste und eine zweite Komponente, welche getrennt voneinander aufbewahrt und erst kurz vor oder während der Applikation vermischt werden, wobei das Polyol P1 ein Bestandteil der ersten und das Polyisocyanat ein Bestandteil der zweiten Komponente sind und das Aldimin der Formel (I) und das Korrosionsschutz-Pigment jeweils ein Bestandteil der ersten und/oder der zweiten Komponente sind.

Bevorzugt liegt das Aldimin der Formel (I) als Bestandteil der ersten Komponente vor.
Bevorzugt liegt das Korrosionsschutz-Pigment als Bestandteil der ersten Komponente vor.

Bevorzugt weist das Polyisocyanat insgesamt eine mittlere NCO-Funktionalität im Bereich von 2.5 bis 4, insbesondere 3 bis 3.8, auf.

Bevorzugt weist das Polyisocyanat insgesamt einen NCO-Gehalt im Bereich von 15 bis 32 Gewicht-%, bevorzugt 18 bis 25 Gewichts-%, auf. Dabei bezieht sich der NCO-Gehalt auf das gesamte Polyisocyanat ohne ein gegebenenfalls enthaltenes Lösemittel. Ein lösemittelhaltiges Polyisocyanat weist somit inklusiv dem Lösemittel einen entsprechend tieferen NCO-Gehalt auf.

Besonders bevorzugt weist das Polyisocyanat insgesamt eine mittlere NCO-Funktionalität im Bereich von 2.5 bis 4 und einen NCO-Gehalt im Bereich von 15 bis 32 Gewichts-% auf.

Bevorzugt ist das Polyisocyanat aliphatisch. Dies ermöglicht Korrosionsschutz-Beschichtungen mit besonders hoher Stabilität gegenüber UV-Strahlung, Oxidation und Feuchtigkeit.

Bevorzugt ist das Polyisocyanat ein Oligomer oder Polymer oder Derivat eines aliphatisches Diisocyanat, bei welchem die beiden Isocyanatgruppen durch einen zweiwertigen Kohlenwasserstoff-Rest mit 4 bis 15 C-Atomen getrennt sind. Insbesondere ist das Polyisocyanat ein Oligomer oder Polymer oder Derivat von mindestens einem Diisocyanat ausgewählt aus der Gruppe bestehend aus 1,6-Hexandiisocyanat (HDI), 1,5-Pentamethylendiisocyanat (PMI), 2,2(4),4-Trimethyl-1,6-hexamethylendiisocyanat (TMDI), Cyclohexan-1,3-diisocyanat, Cyclohexan-1,4-diisocyanat, Isophorondiisocyanat (IPDI), Perhydro-4,4'-diphenylmethandiisocyanat (HMDI), 1,3-Bis(isocyanatomethyl)cyclohexan, 1,4-Bis(isocyanatomethyl)-cyclohexan und Xylylendiisocyanat (XDI).
Von den Diisocyanaten bevorzugt ist HDI oder IPDI, insbesondere HDI. Solche Oligomere, Polymere oder Derivate ermöglichen gut verarbeitbare Beschichtungen von hoher Härte.

Besonders bevorzugt ist das Polyisocyanat ein Oligomer, Polymer oder Derivat von HDI, insbesondere ein Biuret, Isocyanurat, Allophanat, Iminooxadiazindion, Uretdion oder eine Mischung davon. Diese Polyisocyanate ermöglichen gut verarbeitbare Beschichtungen von hoher Härte und Beständigkeit.

Geeignete Polyisocyanate sind kommerziell erhältlich, insbesondere
- Biurete von HDI als Desmodur^{®} N 75, N 100 oder N 3200 (von Covestro), Tolonate^{®} HDB oder HDB-LV (von Vencorex) oder Duranate^{®} 24A-100 (von Asahi Kasei),
- Isocyanurate von HDI als Desmodur^{®} N 3300, N 3600 oder N 3790 BA (von Covestro), Tolonate^{®} HDT, HDT-LV oder HDT-LV2 (von Vencorex), Duranate^{®} TPA-100 oder THA-100 (von Asahi Kasei) oder Coronate^{®} HX (von Nippon Polyurethane),
- Allophanate von HDI als Desmodur^{®} N 3580 BA (von Covestro), Basonat^{®}HA 1000, HA 2000 oder HA 3000 (von BASF)
- Iminooxadiazindione von HDI als Desmodur^{®} N 3900 (von Covestro),
- Isocyanurate von IPDI als Desmodur^{®} Z 4470 (von Covestro) oder Vestanat^{®} T1890/100 (von Evonik),
- Uretdione von HDI als Desmodur^{®} N 3400 (von Covestro),
- Mischsysteme von IPDI und HDI als Desmodur^{®} NZ 1 (von Covestro),
- Allophanate von IPDI als Desmodur^{®} XP 2565 (von Covestro),
sowie zahlreiche weitere geeignete Polyisocyanate.

Am meisten geeignet ist ein Biuret von HDI. Dieses ist besonders niedrigviskos und ermöglicht gut verarbeitbare Beschichtungen mit besonders niedrigem Lösemittelgehalt. Es weist typischerweise eine NCO-Funktionalität von etwa 3.5 bis 3.8 und einen NCO-Gehalt von etwa 22 bis 24 Gewichts-% auf.

Die Korrosionsschutz-Beschichtung enthält weiterhin mindestens ein Polyol P1 mit einer OH-Zahl im Bereich von 60 bis 300 mg KOH/g. Bevorzugt liegt die OH-Zahl im Bereich von 100 bis 250 mg KOH/g. Diese Polyole ermöglichen eine besonders hohe Härte und Beständigkeit.

Bevorzugt ist das Polyol P1 ausgewählt aus der Gruppe bestehend aus Polyacrylatpolyolen, Polyesterpolyolen, Polycarbonatpolyolen, Polycaprolactonpolyolen, Copolymeren dieser Polyole, Copolymeren dieser Polyole mit Polyetherpolyolen und Mischungen der genannten Polyole.

Besonders bevorzugt sind Polyacrylatpolyole, Polyesterpolyole und Mischungen davon.
Besonders geeignet sind OH-funktionelle Polyacrylate mit einem OH-Gehalt im Bereich von 3 bis 5 Gewichts-% und/oder OH-funktionelle Polyester mit einem OH-Gehalt im Bereich von 3 bis 8 Gewichts-%.

Die bevorzugten Polyole P1 ermöglichen eine besonders gute Witterungsstabilität und einen besonders hohen Korrosionsschutz.

Bevorzugt enthält die Korrosionsschutz-Beschichtung insgesamt 8 bis 22 Gewichts-%, insbesondere 10 bis 18 Gewichts-%, Polyole P1 in der bezogen auf die gesamte Beschichtung. Dies ermöglicht einen hohen Korrosionsschutz bei gleichzeitig störungsfreier Aushärtung in hoher Schichtdicke bei feuchtwarmen Klimabedingungen.

Die Korrosionsschutz-Beschichtung enthält weiterhin mindestens ein Aldimin der Formel (I).

Bevorzugt stehen R¹ und R² jeweils für Methyl.

Bevorzugt stehen R³ und R⁴ jeweils für Methoxyethyl oder R³ und R⁴ stehen zusammen für 3-Oxa-1,5-pentylen oder 2,4-Dimethyl-3-oxa-1,5-pentylen und bilden zusammen mit dem Stickstoffatom, an welches R³ und R⁴ gebunden sind, einen Morpholin- oder 2,6-Dimethylmorpholin-Ring.

Bevorzugt stehen R¹ und R² jeweils für Methyl und R³ und R⁴ stehen zusammen für 3-Oxa-1,5-pentylen und bilden zusammen mit dem Stickstoffatom, an welches R³ und R⁴ gebunden sind einen Morpholin-Ring. Diese Aldimine der Formel (I) ermöglichen einen besonders hohen Korrosionsschutz.

Bevorzugt steht A für einen gegebenenfalls cyclische oder aromatische Anteile aufweisenden Alkylen-Rest mit 5 bis 15 C-Atomen oder für einen zwei- oder dreiwertigen Polyoxyalkylen-Rest mit einem mittleren Molekulargewicht Mₙ im Bereich von 170 bis 500 g/mol.

Besonders bevorzugt steht A für einen Rest ausgewählt aus der Gruppe bestehend aus 1,6-Hexylen, (1,5,5-Trimethylcyclohexan-1-yl)methan-1,3, 4,4'-Methylen-bis(cyclohexyl) und Trimethylolpropan- oder Glycerin-gestartetes Tris(ω-polyoxypropylen) mit einem mittleren Molekulargewicht Mₙ im Bereich von 330 bis 500 g/mol.

Besonders bevorzugt ist 1,6-Hexylen. Diese Aldimine der Formel (I) ermöglichen Beschichtungen mit einem besonders niedrigen Lösemittelgehalt, hoher Festigkeit und Beständigkeit und besonders hohem Korrosionsschutz.

Weiterhin besonders bevorzugt ist 4,4'-Methylen-bis(cyclohexyl). Diese Aldimine der Formel (I) ermöglichen Beschichtungen mit besonders hoher Festigkeit und Beständigkeit.

Bevorzugt ist das Aldimin der Formel (I) ausgewählt aus der Gruppe bestehend aus N,N'-Bis(2,2-dimethyl-3-(N-morpholino)propyliden)hexan-1,6-diamin, N,N'-Bis(2,2-dimethyl-3-(N-morpholino)propyliden)-4,4'-methylen-bis(cyclohexylamin) und N,N'-Bis(2,2-dimethyl-3-(N-morpholino)-propyliden)-3-aminomethyl-3,5,5-trimethylcyclohexylamin.

Das Aldimin der Formel (I) wird bevorzugt erhalten aus der Kondensation von mindestens einem Polyamin der Formel A(NH₂)ₙ mit einer in Bezug auf die Amingruppen stöchiometrischen oder leicht überstöchiometrischen Menge von mindestens einem Aldehyd der Formel (II), 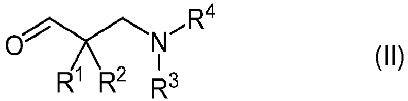 wobei A, n und R¹ bis R⁴ die bereits genannten Bedeutungen aufweisen.
Die Kondensation wird vorteilhaft bei einer Temperatur im Bereich von 15 bis 120°C, bevorzugt bei 20 bis 100°C, durchgeführt, gegebenenfalls in Anwesenheit eines Lösemittels. Das Kondensationswasser wird bevorzugt aus der Reaktionsmischung entfernt, entweder als Azeotrop mit einem geeigneten Lösemittel oder bevorzugt direkt durch Destillation, gegebenenfalls unter Vakuum.

Als Polyamin geeignet ist insbesondere 1,6-Hexandiamin, 1-Amino-3-aminomethyl-3,5,5-trimethylcyclohexan (Isophorondiamin), Bis(4-aminocyclohexyl)-methan, 1,3-Bis(aminomethyl)benzol, 1,3-Bis(aminomethyl)cyclohexan, 1,4-Bis(aminomethyl)cyclohexan, α,ω-Polyoxypropylendiamin mit einem mittleren Molekulargewicht Mₙ im Bereich von 200 bis 500 g/mol oder Trimethylolpropan- oder Glycerin-gestartetes Tris(ω-polyoxypropylenamin) mit einem mittleren Molekulargewicht Mₙ im Bereich von 380 bis 500 g/mol.
Bevorzugt sind 1,6-Hexandiamin, 1-Amino-3-aminomethyl-3,5,5-trimethylcyclohexan oder Bis(4-aminocyclohexyl)methan, besonders bevorzugt sind 1,6-Hexandiamin oder Bis(4-aminocyclohexyl)methan, am meisten bevorzugt ist 1,6-Hexandiamin.

Als Aldehyd der Formel (II) geeignet ist insbesondere 2,2-Dimethyl-3-di(methoxyethyl)aminopropanal, 2,2-Dimethyl-3-(N-morpholino)propanal oder 2,2-Dimethyl-3-(N-2,6-dimethylmorpholino)propanal, insbesondere 2,2-Dimethyl-3-(N-morpholino)propanal.

Bevorzugt ist das Aldimin der Formel (I) in einer solchen Menge vorhanden, dass das Verhältnis zwischen den Aldimingruppen und den in der Beschichtung vorhandenen Isocyanatgruppen im Bereich von 0.2 bis 0.7, bevorzugt 0.2 bis 0.5, liegt.

Bevorzugt enthält die Korrosionsschutz-Beschichtung insgesamt 2.5 bis 10 Gewichts-%, bevorzugt 3 bis 7 Gewichts-%, Aldimine der Formel (I) bezogen auf die gesamte Beschichtung.

Eine solche Korrosionsschutz-Beschichtung ermöglicht eine besonders vorteilhafte Kombination aus hohem Korrosionsschutz, hoher Festigkeit und Haftkraft und hoher Robustheit bei der Applikation in hoher Schichtdicke bei feuchtwarmen Klimabedingungen.

Die Korrosionsschutz-Beschichtung enthält weiterhin mindestens ein Korrosionsschutz-Pigment.

Das Korrosionsschutz-Pigment hat bevorzugt eine mittlere Teilchengrösse im Bereich von 0.1 bis 20 µm, bevorzugt 0.5 bis 10 µm, insbesondere 1 bis 5 µm.

Bevorzugt ist das Korrosionsschutz-Pigment ein Phosphor-haltiges Korrosionsschutz-Pigment, insbesondere ein Phosphat, Orthophosphat oder Polyphosphat. Es enthält als Gegenion insbesondere Chrom, Zink, Aluminium, Kalzium, Strontium, Molybdän oder eine Kombination dieser Metalle. Bevorzugt ist es frei von Chrom.

Bevorzugt ist ein Zink-Phosphat, Zink-Aluminium-Phosphat, Zink-Orthophosphat, Zink-Aluminium-Orthophosphat, Kalziumphosphat, Zink-Polyphosphat, Zink-Aluminium-Polyphosphat, Zink-Aluminium-Molybdän-Orthophosphat oder ein Strontium-Aluminium-Polyphosphat.

Besonders bevorzugt als Korrosionsschutz-Pigment sind Zink-haltige Phosphate, Orthophosphate oder Polyphosphate. Gegebenenfalls enthalten diese weitere Metalle, insbesondere Aluminium.

Bevorzugt sind kommerziell verfügbare Korrosionsschutz-Pigmente, wie insbesondere Heucophos^{®} ZPA, ZPO, ZAPP, ZAM Plus oder ZCP Plus (alle von Heubach) oder Zinc Phosphate PZ20, Zinc Phosphate PZW2, Novinox ACE 20, Novinox ACE 36W, Novinox ACE 24, Novinox PZ02, Novinox PPS10, Phosphinal PZ04 oder Phosphinox PZ06 (alle von SNCZ).

Bevorzugt enthält die Korrosionsschutz-Beschichtung insgesamt einen Gehalt an Korrosionsschutz-Pigmenten im Bereich von 5 bis 20 Gewichts-%, insbesondere 7 bis 15 Gewichts-%, bezogen auf die gesamte Beschichtung.

Bevorzugt enthält die Korrosionsschutz-Beschichtung mindestens einen weiteren Bestandteil ausgewählt aus der Gruppe bestehend aus Füllstoffen, weiteren Pigmenten, Molekularsiebpulver, Katalysatoren, Additiven und Lösemitteln.

Geeignete Füllstoffe sind insbesondere gemahlenes oder gefälltes Calciumcarbonat, welches gegebenenfalls mit Fettsäure, insbesondere Stearaten, beschichtet ist, Baryt (Schwerspat), Talk, Quarzmehl, Quarzsand, Siliciumcarbid, Eisenglimmer, Dolomit, Wollastonit, Kaolin, Mica (Kalium-Aluminium-Silikat), Molekularsieb, Aluminiumoxid, Zinkoxid, Aluminium-dotiertes Zinkoxid, Aluminiumhydroxid, Magnesiumhydroxid, Kieselsäure, Zement, Gips, Flugasche, Russ, Graphit, Metall-Pulver wie Aluminium, Kupfer, Eisen, Zink, Silber oder Stahl, PVC-Pulver oder Hohlkugeln.
Davon bevorzugt sind Calciumcarbonat, Baryt, Talk, Quarzmehl, Kaolin oder eine Kombination davon.

Geeignete weitere Pigmente sind insbesondere Titandioxid, sowie gegebenenfalls organische oder anorganische Farbpigmente wie insbesondere Eisenoxide, Chromoxide oder Russ.

Geeignete Molekularsiebpulver sind insbesondere mikronisierte Zeolithe mit einer Teichengrösse bis etwa 50 µm, bevorzugt bis etwa 40 µm, und einem Porendurchmesser im Bereich von 30 bis 100 nm (= 3 bis 10 Å), bevorzugt 30 bis 40 nm. Solche Molekularsiebpulver wirken als Trocknungsmittel. Sie ermöglichen Korrosionsschutz-Beschichtungen mit einer langen Topfzeit und somit einer besonders einfache Handhabung.
Bevorzugt enthält die Korrosionsschutz-Beschichtung insgesamt 0.5 bis 5 Gewichts-%, insbesondere 1 bis 3 Gewichts-%, Molekularsiebpulver.

Geeignete Katalysatoren sind insbesondere für Katalysatoren für die Beschleunigung der Reaktion von Isocyanatgruppen, insbesondere Organozinn(IV)-Verbindungen wie insbesondere Dibutylzinndiacetat, Dibutylzinndilaurat, Dibutylzinndichlorid, Dibutylzinndiacetylacetonat, Dimethylzinndilaurat, Dioctylzinndiacetat, Dioctylzinndilaurat oder Dioctylzinndiacetylacetonat, Komplexverbindungen von Bismut(lll) oder Zirkonium(IV), Zinn(II)carboxylate, Organotitanate wie insbesondere Diisopropoxytitan-bis-(ethylacetoacetat), oder Kaliumacetat, oder tertiäre Aminogruppen enthaltende Verbindungen, tertiäre Aminogruppen enthaltende Verbindungen, insbesondere 1,4-Diazabicyclo[2.2.2]octan (DABCO), 1,8-Diazabicyclo[5.4.0]undec-7-en (DBU), 1,5-Diazabicyclo[4.3.0]non-5-en (DBN), N-Alkylmorpholine, 2,2'-Dimorpholinodiethylether (DMDEE) oder N,N'-Dimethylpiperazin.

Geeignete Katalysatoren sind weiterhin Katalysatoren für die Hydrolyse von Aldiminen, insbesondere organische Säuren wie Neodecansäure, Benzoesäure, Salicylsäure oder 2-Nitrobenzoesäure, organische Carbonsäureanhydride, Silylester von Carbonsäuren, organische Sulfonsäuren, Sulfonsäureester, Besonders bevorzugt sind aromatische Carbonsäuren wie insbesondere Salicylsäure.

Geeignete Additive sind insbesondere Rheologie-Modifizierer, insbesondere Verdicker wie hydriertes Rizinusöl, Derivate von Rizinusöl, Polyamide, Polyamidwachse, Polyurethane, Harnstoffverbindungen, pyrogene Kieselsäuren, Celluloseether, hydrophob modifizierte Polyoxyethylene oder Schichtsilikate wie Bentonite; weiterhin oberflächenaktive Additive wie Entschäumer, Entlüfter, Netzmittel oder Dispergiermittel; sowie Stabilisatoren gegen Oxidation, Wärme, Licht oder UV-Strahlung.

Geeignete Lösemittel sind insbesondere Aceton, Methylacetat, Butylacetat, 1-Methoxy-2-propylacetat, Ethyl-3-ethoxypropionat, Diisopropylether, Diethylenglykoldiethylether, Ethylenglykoldiethylether, Ethylenglykolmonobutylether, Ethylenglykolmono-2-ethylhexylether, Acetale wie Propylal, Butylal, 2-Ethylhexylal, Dioxolan, Glycerolformal oder 2,5,7,10-Tetraoxaundecan (TOU), Toluol, Xylol, Heptan, Octan, Naphtha, White Spirit, Petrolether oder Benzin, insbesondere Solvesso^{™}-Typen (von Exxon), sowie Propylencarbonat, Dimethylcarbonat, Butyrolacton, N-Methylpyrrolidon, N-Ethylpyrrolidon, p-Chlorobenzotrifluorid oder Benzotrifluorid. Bevorzugt sind Butylacetat, 1-Methoxy-2-propylacetat oder Xylol.

Die Korrosionsschutz-Beschichtung kann weitere Zusätze enthalten, insbesondere
- zwei- oder mehrfunktionelle Alkohole oder weitere, von den Polyolen P1 verschiedene Polyole;
- weitere mit Isocyanaten reaktive Substanzen, insbesondere Amine, insbesondere strerisch und/oder elektronisch gehinderte Polyamine, Aminoalkohole oder Thiole;
- Weichmacher, insbesondere Phthalate, hydrierte Phthalate, Terephthalate, hydrierte Terephthalate, Trimellitate, Adipate, Azelate, Sebacate, Benzoate, Glykolether, Glykolester, organische Phosphor- oder Sulfonsäureester, Polybutene, Polyisobutene oder von natürlichen Fetten oder Ölen abgeleitete Weichmacher, insbesondere epoxidiertes Soja- oder Leinöl;
- Trocknungsmittel, insbesondere das bereits genannte Molekularsiebpulver, Calciumoxid oder Orthoester der Ameisensäure, Essigsäure oder Propionsäure;
- Haftvermittler, insbesondere Organoalkoxysilane oder Titanate;
- Fasern, insbesondere Glasfasern, Kohlefasern, Metallfasern, Keramikfasern, Kunststofffasern wie Polyamidfasern oder Polyethylenfasern, oder Naturfasern wie Wolle, Cellulose, Hanf oder Sisal;
- Nanofüllstoffe wie Graphen oder Carbon Nanotubes;
- Farbstoffe;
- natürliche Harze, Wachse, Fette oder Öle wie Kolophonium, Schellack, Carnauba, Leinöl, Rizinusöl oder Sojaöl;
- nicht-reaktive Polymere, insbesondere Homo- oder Copolymere von ungesättigten Monomeren;
- flammhemmende Substanzen, insbesondere die bereits genannten Füllstoffe Aluminiumhydroxid oder Magnesiumhydroxid, sowie insbesondere organische Phosphorsäureester wie insbesondere Triethylphosphat, Trikresylphosphat, Triphenylphosphat, Diphenylkresylphosphat, Isodecyldiphenylphosphat, Tris(1,3-dichlor-2-propyl)phosphat, Tris(2-chlorethyl)phosphat, Tris(2-ethylhexyl)phosphat, Tris(chlorisopropyl)phosphat, Tris(chlorpropyl)phosphat, isopropyliertes Triphenylphosphat, Mono-, Bis- oder Tris(isopropylphenyl)phosphate unterschiedlichen Isopropylierungsgrades, Resorcinol-bis(diphenylphosphat), Bisphenol-A-bis(diphenylphosphat), Ammoniumpolyphosphate, Chlorparaffine oder chlorierte oder bromierte Polyole oder Weichmacher;
oder weitere üblicherweise in Polyurethan-Zusammensetzungen eingesetzte Substanzen.

Es kann sinnvoll sein, gewisse Substanzen vor dem Einmischen in die Korrosionsschutz-Beschichtung chemisch oder physikalisch zu trocken.

Bevorzugt enthält die Korrosionsschutz-Beschichtung mindestens einen Füllstoff, mindestens ein Titandioxid und mindestens ein organisches Lösemittel.

Bevorzugt enthält die Korrosionsschutz-Beschichtung einen geringen Gehalt an organischen Lösemitteln. Dies ermöglicht eine gute Verarbeitbarkeit bei geringer Emission und geringem Volumenschwund während der Aushärtung.

Bevorzugt enthält die Korrosionsschutz-Beschichtung insgesamt weniger als 18 Gewichts-% organische Lösemittel mit einem Siedepunkt von weniger als 200°C bei 1.013 bar bezogen auf die gesamte Beschichtung.

Bevorzugt enthält die Korrosionsschutz-Beschichtung insgesamt weniger als 30 Volumen-% Lösemittel mit einem Siedepunkt von weniger als 200°C bei 1.013 bar bezogen auf die gesamte Beschichtung.

Eine bevorzugte Korrosionsschutz-Beschichtung enthält bezogen auf die gesamte Beschictung
- 8 bis 22 Gewichts-%, insbesondere 10 bis 18 Gewichts-%, Polyole P1,
- 2.5 bis 10 Gewichts-%, insbesondere 3 bis 7 Gewichts-%, Aldimine der Formel (I),
- 5 bis 20 Gewichts-%, insbesondere 7 bis 15 Gewichts-%, Korrosionsschutz-Pigmente,
- 3 bis 15 Gewichts-%, insbesondere 4 bis 10 Gewichts-%, Titandioxide,
- 20 bis 60 Gewichts-%, insbesondere 30 bis 50 Gewichts-%, Füllstoffe,
- 5 bis 17 Gewichts-%, insbesondere 10 bis 16 Gewichts-%, organische Lösemittel mit einem Siedepunkt von weniger als 200°C bei 1.013 bar,
- 7 bis 25 Gewichts-%, insbesondere 9 bis 15 Gewichts-%, Polyisocyanat, und
- 0 bis 10 Gewichts-% weitere Substanzen, insbesondere 0.5 bis 5 Gewichts-% Molekularsiebpulver.

Bevorzugt umfasst die Korrosionsschutz-Beschichtung zwei Komponenten, welche getrennt voneinander aufbewahrt und erst kurz vor oder während der Applikation vermischt werden. Bevorzugt sind Polyole P1, Aldimine der Formel (I), Pigmente, Füllstoffe und organische Lösemittel Bestandteil der ersten Komponente, und Polyisocyanate und gegebenenfalls weitere organische Lösemittel sind bevorzugt Bestandteil der zweiten Komponente.

Die erste und die zweite Komponente werden jeweils separat und unter Ausschluss von Feuchtigkeit hergestellt und bei Umgebungstemperatur in separaten, feuchtigkeitsdichten Gebinden aufbewahrt. Ein geeignetes feuchtigkeitsdichtes Gebinde besteht insbesondere aus einem gegebenenfalls beschichteten Metall und/oder Kunststoff. Es ist insbesondere ein Fass, ein Container, ein Hobbock, ein Eimer, ein Kanister, eine Büchse, ein Beutel, ein Schlauchbeutel, eine Kartusche oder eine Tube.
Jede der beiden Komponenten ist bei geeigneter Verpackung und Aufbewahrung lagerstabil, typischerweise während mehreren Monaten bis zu einem Jahr oder länger.

Die Komponenten der Korrosionsschutz-Beschichtung werden kurz vor oder während der Applikation vermischt.
Das Mischungsverhältnis wird bevorzugt so gewählt, dass das Verhältnis der Anzahl Isocyanatgruppen bezogen auf die Summe der Anzahl Hydroxylgruppen und Aldimingruppen im Bereich von 0.9 bis 1.5, insbesondere 1.0 bis 1.3, liegt.
In Gewichtsteilen liegt das Mischungsverhältnis zwischen der ersten und der zweiten Komponente bevorzugt im Bereich von 1:1 bis 50:1, insbesondere 2:1 bis 15:1.
Das Mischen der Komponenten erfolgt bevorzugt kontinuierlich oder batchweise mittels eines geeigneten Verfahrens, wobei darauf zu achten ist, dass zwischen dem Mischen der Komponenten und der Applikation nicht zu viel Zeit vergeht und die Applikation innerhalb der Topfzeit erfolgt. Das Mischen und die Applikation erfolgen bevorzugt bei Umgebungstemperatur, welche typischerweise im Bereich von etwa 5 bis 40°C liegt.

Mit dem Mischen der Komponenten beginnt die Aushärtung der Korrosionsschutz-Beschichtung. Dabei reagieren die Isocyanatgruppen mit den Hydroxylgruppen und unter dem Einfluss von Feuchtigkeit mit den Aldimingruppen. Weitere Isocyanatgruppen reagieren unter dem Einfluss von Feuchtigkeit untereinander. Als Ergebnis hauptsächlich dieser Reaktionen polymerisiert die Korrosionsschutz-Beschichtung und härtet dadurch aus. Aus den Aldimingruppen wird der entsprechende Aldehyd der Formel (II) freigesetzt. Dieser verbleibt mehrheitlich in der Beschichtung, wo er ausgezeichnet verträglich ist und überraschenderweise keinen negativen Einfluss auf die Korrosionsschutz-Eigenschaften der Beschichtung ausübt.

Die Aushärtung erstreckt sich typischerweise über einige Stunden bis Tage. Die Dauer hängt unter anderem von der Temperatur, der Reaktivität der Bestandteile, deren Stöchiometrie und der Gegenwart bzw. Menge von Beschleunigern ab.

Im frisch vermischten Zustand hat die Korrosionsschutz-Beschichtung eine niedrige Viskosität, welche eine Applikation in der gewünschten Schichtdicke mittels einem Spritzverfahren ermöglicht.

Die Korrosionsschutz-Beschichtung zeigt bei ausreichend langer Topfzeit eine schnelle Aushärtung und verfügt nach der Aushärtung über eine hohe Haftkraft, hohe Festigkeit und ebenmässige Oberfläche. Sie zeigt eine hohe Witterungsstabilität und eine ausgezeichnete Wirkung als Schutz gegen Korrosion von beschichteten Metalloberflächen gegen Kondensationswasser und Salzsprühnebel.

Die Korrosionsschutz-Beschichtung wird bevorzugt verwendet für den Schutz von Metalloberflächen.

Als Metall bevorzugt sind alle Arten von Stahl, Aluminium, Kupfer, Eisen, Buntmetalle oder oberflächenveredelte Metalle oder Legierungen wie verzinkte oder verchromte Metalle. Besonders bevorzugt ist Stahl, insbesondere Stahl SA 2.5, galvanisierter Stahl oder Edelstahl.

Die Korrosionsschutz-Beschichtung ermöglicht eine besonders hohe und langlebige Witterungsstabilität von Stahlkonstruktionen in Land-, Stadt-, Industrie- und Meeresatmosphäre.

Ein weiterer Gegenstand der Erfindung ist ein Verfahren zum Beschichten von mindestens einem Substrat, umfassend die Schritte
(i) gegebenenfalls Applizieren einer Grundierung,
(ii) Applizieren der vermischten Korrosionsschutz-Beschichtung innerhalb der Topfzeit,
(iii) gegebenenfalls Wiederholen von Schritt (ii), und
(iv) gegebenenfalls Applizieren eines Topcoats auf die ausgehärtete Korrosionsschutz-Beschichtung.

Als Substrat bevorzugt sind alle Arten von Metallen, insbesondere alle Arten von Stahl, Aluminium, Kupfer, Eisen, Buntmetalle oder oberflächenveredelte Metalle oder Legierungen wie verzinkte oder verchromte Metalle. Besonders bevorzugt ist Stahl oder Aluminium, insbesondere Stahl SA 2.5, galvansierter Stahl, feuerverzinkter Stahl oder Edelstahl.
Es sind auch weitere Substrate möglich, insbesondere beschichtete Metalle wie lackierte oder pulverbeschichtete Metalle, oder Beton, Mörtel, Zementestrich, Natursteine, Asphalt, Bitumen, Holz, mit Harzen wie Phenol-, Melamin- oder Epoxidharzen gebundene Holzwerkstoffe, Harz-Textil-Verbundwerkstoffe oder weitere sogenannte Polymer-Composites, Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, faserverstärkte Kunststoffe, wie Kohlefaser-verstärkte Kunststoffe (CFK), Glasfaser-verstärkte Kunststoffe (GFK) oder Sheet Moulding Compounds (SMC).

Das Substrat kann mittels einem physikalischen und/oder chemischen Reinigungsverfahren oder dem Aufbringen eines Aktivators oder eines Primers vorbehandelt sein.

Eine Metalloberfläche ist bevorzugt gereinigt, insbesondere durch Strahlen, und frei von Öl, Fett, Oxidschichten, Rost und metallischen Spänen. Sie weist bevorzugt einen Rauheitsgrad im Bereich von fein über mittel bis zu grob auf.

Für den Fall, dass die Korrosionsschutz-Beschichtung für die Reparatur einer bereits beschichteten Metalloberfläche eingesetzt wird, bei welcher die alte Beschichtung beschädigt und/oder nicht mehr tauglich ist, ist die Oberfläche bevorzugt so vorbereitet, dass die alte Beschichtung zumindest teilweise von der Metalloberfläche entfernt wurde, bevorzugt durch Schleifen.

Gegebenenfalls wird in Schritt (i) eine Grundierung aufgetragen. Dies ist für die Verwendung auf Metall bevorzugt.
Als Grundierung bevorzugt sind Epoxidharz-Grundierungen, insbesondere Zinkstaub- oder Zinkphosphat- oder Eisenglimmer-haltige Epoxidharz-Grundierungen, insbesondere die kommerziellen Produkte SikaCor^{®} Zinc R (Plus), SikaCor^{®} EG Phosphat Plus oder SikaCor^{®} EG-1 Plus (alle von Sika).

In Schritt (ii) wird die vermischten Korrosionsschutz-Beschichtung innerhalb der Topfzeit appliziert.
Die Applikation erfolgt bevorzugt mittels einer Spritzapparatur oder mit Hilfe eines Pinsels, einer Rolle oder einer Rakel, bevorzugt mit einer Spritzapparatur, insbesondere in einem Airless-Spritzverfahren, mit einem Airmix Spritzgerät oder einer Fliessbecherpistole.

Die Applikation erfolgt bevorzugt in einer solchen Schichtdicke, dass nach der Aushärtung eine Trockenschichtdicke im Bereich von 50 bis 1'000 µm, bevorzugt 240 bis 500 µm, vorliegt. Dies entspricht typischerweise dem Auftrag einer Schichtdicke (nass) im Bereich von 70 bis 1'400 µm, bevorzugt 300 bis 700 µm. Mit der erfindungsgemässen Korrosionsschutz-Beschichtung lassen sich besonders hohe Schichtdicken in einem Arbeitsgang applizieren, ohne dass bei der Aushärtung in feuchtwarmem Klima wie 30°C/80% relativer Feuchtigkeit Qualitätseinbussen auftreten.

Bevorzugt wird Schritt (ii) in einem Arbeitsgang in einer Trockenschichtdicke von mindestens 240 µm appliziert. Dies entspricht typischerweise dem Auftrag einer Schichtdicke (nass) von mindestens 300 µm. Dies ermöglicht mit wenig Arbeits- und Zeitaufwand einen besonders hohen und langlebigen Korrosionsschutz.

Bevorzugt erreicht die ausgehärtete Beschichtung aus Schritt (ii) mit einer Trockenschichtdicke von mindestens 240 µm nach einer Aushärtung von 7 Tagen bei 30 °C/80 % relativer Feuchtigkeit einen Haftzugwert von mindestens 4 MPa, bestimmt gemäss ISO 4624 bei einer Prüfgeschwindigkeit von 1 MPa/s. Damit verfügt die Beschichtung über eine hohe Haftkraft und Festigkeit trotz Aushärtung bei besonders schwierigen Bedingungen und vermag einen hohen Schutz für das beschichtete Substrat zu gewährleisten.

Um eine besonders hohe Schichtdicke oder eine besonders gute Überdeckung zu erreichen, kann die Korrosionsschutz-Beschichtung in mehr als einem Arbeitsgang appliziert werden, wodurch sich die insgesamt erhaltene Trockenschichtdicke entsprechend erhöht. Dafür wird in Schritt (iii) gegebenenfalls eine weitere Schicht der vermischten Korrosionsschutz-Beschichtung innerhalb der Topfzeit auf die ausgehärtete Schicht appliziert. Die bevorzugten Applkationsmethoden und Schichtdicken entsprechen dabei den in Schritt (ii) beschriebenen.

Bevorzugt wird die Korrosionsschutz-Beschichtung in einem oder zwei Arbeitsgängen appliziert, was den Schritten (ii) und gegebenenfalls (iii) entspricht.

Insbesondere wird die Korrosionsschutz-Beschichtung in einer oder zwei Schichten von je 300 bis 700 µm (nass) appliziert, was nach der Aushärtung typischerweise insgesamt eine Trockenschichtdicke im Bereich von etwa 240 bis 1'000 µm ergibt. Dies ermöglicht einen hohen und besonders langanhaltenden Korrosionsschutz.

Für den Fall, dass die Korrosionsschutz-Beschichtung in mehr als einer Schicht appliziert wird, wird mit der Applikation der nachfolgenden Schicht bevorzugt gewartet, bis die vorhergehende Schicht soweit ausgehärtet ist, dass sie eine trockene, nicht-klebrige Oberfläche aufweist.

Gegebenenfalls wird in Schritt (iv) ein Topcoat auf die ausgehärtete Korrosionsschutz-Beschichtung appliziert. Bevorzugt verfügt der Topcoat über eine höhere Härte als die erfindungsgemässe Korrosionsschutz-Beschichtung. Ein solcher Topcoat vermag in Kombination mit der Flexibilität der beschriebenen Korrosionsschutz-Beschichtung den Schutz gegenüber allen Arten von Beschädigungen zusätzlich zu erhöhen.

Als Topcoat geeignet sind insbesondere solche auf Epoxidharz- oder Acrylat- oder Polyurethan-Basis, oder Mischungen davon. Besonders geeignet sind Zinkstaub- oder Eisenglimmer-haltige Epoxidharz-Deckbeschichtungen oder Acryl-Polyurethan-Deckbeschichtungen, insbesondere die kommerziellen Produkte SikaCor^{®} Zinc R, SikaCor^{®} EG-1 Plus oder Sika^{®} Permacor^{®}-2230 VHS (alle von Sika).

In einer bevorzugten Ausführungsform wird im erfindungsgemässen Verfahren eine Grundierung, die erfindungsgemässe Korrosionsschutz-Beschichtung in einer oder zwei Arbeitsgängen und ein Topcoat appliziert. Dabei wird die erfindungsgemässe Korrosionsschutz-Beschichtung auch als Zwischenschicht bezeichnet.

Ein weiterer Gegenstand der Erfindung ist ein Beschichtungssystem, erhalten aus dem beschriebenen Verfahren, umfassend mindestens ein Metallsubstrat, mindestens eine Grundierung, die beschriebene Korrosionsschutz-Beschichtung, insbesondere in einer Trockenschichtdicke im Bereich von 240 bis 1'000 µm, und gegebenenfalls mindestens einen Topcoat. Ein solches Beschichtungssystem ermöglicht eine hohe und langanhaltende Witterungsstabilität von Stahlkonstruktionen in Land-, Stadt-, Industrie- und Meeresatmosphäre. Für Stahlkonstruktionen im Strassenbau kann mit dem erfindungsgemässen Beschichtungssystem eine Lebensdauer von 50 Jahre und mehr gewährleistet werden.

Aus der Verwendung der Korrosionsschutz-Beschichtung für den Schutz von Metalloberflächen oder dem Verfahren zum Beschichten von mindestens einem Substrat wird ein beschichteter Artikel erhalten.

Der Artikel ist insbesondere eine Metallkonstruktion, welche atmosphärisch belastet und zumindest teilweise mit der beschriebenen Korrosionsschutz-Beschichtung beschichtet ist, insbesondere eine Brücke, eine Galerie, eine Rohrleitung, eine Industrieanlage, eine Hafenanlage, ein Tank, eine Windkraftanlage, eine Kläranlage, oder jeweils ein Teil davon.

Der beschichtete Artikel ist besonders widerstandfähig gegenüber mechanischer Beschädigung bei Transport oder Montage und verfügt über eine hohe Beständigkeit gegenüber Wasser, Meerwasser, Abwasser, Dämpfen von Säuren oder Laugen, Salzen, Reinigungsmitteln, Fetten, Ölen, Treibstoffen oder Lösemitteln.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.
Als "Normklima" ("NK") wird eine Temperatur von 23±1 °C und eine relative Luftfeuchtigkeit von 50±5% bezeichnet.
Die verwendeten Chemikalien waren, sofern nicht anders bezeichnet, von Sigma-Aldrich Chemie GmbH.

### Herstellung von Aldiminen:

**Aldimin A1:** N,N'-Bis(2,2-dimethyl-3-(N-morpholino)propyliden)hexan-1,6-diamin 359.5 g 2,2-Dimethyl-3-(N-morpholino)propanal wurden in einem Rundkolben unter Stickstoffatmosphäre vorgelegt. Unter Rühren wurden 166.0 g Hexan-1,6-diamin-Lösung (70 Gewichts-% in Wasser) zugegeben und anschliessend die flüchtigen Bestandteile bei 80 °C und 10 mbar Vakuum entfernt. Erhalten wurde eine fast farblose Flüssigkeit mit einem berechneten Aldimin-Equivalentgewicht von ca. 219 g/eq.

**Aldimin A2:** N,N'-Bis(2,2-dimethyl-3-(N-morpholino)propyliden)-4,4'-methylen-bis(cyclohexylamin)
359.5 g 2,2-Dimethyl-3-(N-morpholino)propanal wurden in einem Rundkolben unter Stickstoffatmosphäre vorgelegt. Unter Rühren wurden 210.4 g 4,4'-Methylen-bis-(cyclohexylamin) (Amicure^{®} PACM, von Evonik) zugegeben und anschliessend die flüchtigen Bestandteile bei 80 °C und 10 mbar Vakuum entfernt. Erhalten wurde eine gelbliche Flüssigkeit mit einem berechneten Aldimin-Equivalentgewicht von ca. 267 g/eq.

### Herstellung von Korrosionsschutz-Beschichtungen:

### Beispiele 1 bis 4:

Für jedes Beispiel wurde eine erste Komponente **(Komponente-1)** hergestellt, indem die in Tabelle 1 angegebenen Inhaltsstoffe in den angegebenen Mengen (in Gewichtsteilen) mittels eines Zentrifugalmischers (SpeedMixer^{™} DAC 150, FlackTek Inc.) vermischt und unter Ausschluss von Feuchtigkeit aufbewahrt wurden.
Als zweite Komponente **(Komponente-2)** wurde das in Tabelle 1 angegebene Polyisocyanat in der angegebenen Menge (in Gewichtsteilen) eingesetzt. Anschliessend wurden die beiden Komponenten jeden Beispiels mittels des Zentrifugalmischers zu einer homogenen Flüssigkeit verarbeitet und diese unverzüglich folgendermassen geprüft:
Die **Topfzeit** wurde im Normklima und bei 30°C/80% relativer Feuchtigkeit mittels einem Gelation Timer GT-5 (von Techne) bestimmt.

Von jedem Beispiel wurden mehrere Prüfkörper hergestellt, indem jeweils eine Schicht von 600 µm Nassfilm (entspricht 450 µm Trockenfilm) auf ein Stahlblech (gestrahlt SA 2%, Rautiefe 60-80 µm, 150 x 100 x 3 mm) mittels einem Filmziehrahmen aufgezogen wurde. Einige dieser Prüfkörper wurden unmittelbar nach der Herstellung 7 Tage im Normklima gelagert bzw. ausgehärtet, weitere wurden 7 Tage in einem Klimaschrank bei 30°C/80% relativer Feuchtigkeit gelagert bzw. ausgehärtet, und weitere wurden 7 Tage in einem Klimaschrank bei 6°C/70% relativer Feuchtigkeit gelagert bzw. ausgehärtet. Mit diesen Prüfkörpern wurden die folgenden Prüfungen durchgeführt:
Der **Aspekt** wurde von aussen und mittels Aufschneiden beurteilt.
Von den Prüfkörpern, die bei 30°C/80% relativer Feuchtigkeit gelagert waren, wurde bereits nach 1 Tag **(1d)** und erneut nach 7 Tagen **(7d)** die **Pendelhärte** nach König gemäss DIN EN ISO 1522 bestimmt.
Von einigen der Prüfkörper wurde ein Test auf **Haftzug** gemäss ISO 4624 mit einer Prüfgeschwindigkeit von 1MPa/s durchgeführt, wobei ein auf die Beschichtung aufgeklebter Stempel senkrecht nach oben weggezogen wurde. Ein hoher Haftzugwert zeigt eine hohe Haftkraft und Festigkeit der Beschichtung.

Als Mass für die Korrosionsbeständigkeit wurden einige Prüfkörper während 720 h mit Kondensationswasser **(720 h KW)** gemäss ISO 6270-1 belastet und nach einer Trocknungszeit von 7 Tagen im NK ein Test auf **Haftzug** wie vorgängig beschrieben durchgeführt. Weitere Prüfkörper wurden während 720 h mit neutralem Salzsprühnebel **(720 h SSN)** gemäss ISO 9227 belastet, wobei vor der Belastung in jeden dieser Prüfkörper ein Ritz von 50 mm Länge und 2 mm Breite in die Beschichtung bis auf das Stahlblech eingeritzt wurde. Nach der Belastung wurde ein Test auf **Haftzug** wie vorgängig beschrieben durchgeführt. Zusätzlich wurde die Beschichtung auf beiden Seiten des Ritzes mechanisch entfernt und am freigelegten Stahlblech das Mass der **Unterrostung** (in mm) neben dem Ritz bestimmt und als Mittelwert angegeben. Ein hoher Haftzugwert und eine geringe Unterrostung zeigen eine hohe Korrosionsbeständigkeit.
Zur Beurteilung der **Zwischenhaftung** wurde für das entsprechende Beispiel jeweils ein Stahlblech wie vorgängig beschrieben mit 600 µm (nass) beschichtet und im Normklima entweder bis zu Trockengrad 6 **(TG6)** (nach DIN EN ISO 9117-5) gelagert, oder während 7 Tagen **(7d NK)** gelagert, und anschliessend wie vorgängig beschrieben mit einer weiteren Schicht von 600 µm (nass) desselben Materials beschichtet. Die so hergestellten Prüfkörper wurden weitere 7 Tage im Normklima gelagert und anschliessend ein Test auf **Haftzug** wie vorgängig beschrieben durchgeführt. Ein hoher Haftzugwert zeigt eine gute Zwischenhaftung zwischen den beiden Schichten.

Die Resultate sind in Tabelle 2 angegeben.
Die Beispiele 1 bis 3 sind erfindungsgemässe Beispiele, das mit (Vergleich) bezeichnete Beispiel 4 ist ein Vergleichsbeispiel.

**Tabelle 1: Zusammensetzung der Beispiele 1 bis 4.**

| **Beispiel** | **1** | **2** | **3** | **4 (Vergleich)** |
|---|---|---|---|---|
| **Komponente-1** : | | | | |
| Acrylatharz 1 | 16.65 | 16.65 | 16.65 | 21.4 |
| Polyesterharz 2 | 4.75 | 4.75 | 4.75 | 6.1 |
| Aldimin **A1** | 4.0 | 4.0 | - | - |
| Aldimin **A2** | - | - | 4.0 | - |
| Korrosionsschutz-Pigment 3 | 10.0 | 10.0 | 10.0 | 10.0 |
| Titandioxid | 6.7 | 6.7 | 6.7 | 6.7 |
| Farbpigmente | 1.0 | 1.0 | 1.0 | 1.0 |
| Kreide | 26.4 | 24.45 | 26.4 | 25.55 |
| Talk | 20.0 | 20.0 | 20.0 | 20.0 |
| Molekularsiebpulver 4 | - | 2.0 | - | - |
| Additive | 3.2 | 3.2 | 3.2 | 3.2 |
| DBTDL⁵ | 0.05 | - | 0.05 | 0.05 |
| Butylacetat | 7.25 | 7.25 | 7.25 | 6.0 |

| **Komponente-2:** | | | | |
|---|---|---|---|---|
| Polyisocyanat ⁶ | 15.41 | 15.41 | 14.50 | 13.64 |
| Dichte: | 1.54 g/cm³ | 1.54 g/cm³ | 1.55 g/cm³ | 1.54 g/cm³ |
| Lösemittelgehalt : | 14.8 Gew.% | 14.8 Gew.% | 14.8 Gew.% | 15.0 Gew.% |
| | 25.7 Vol.% | 25.7 Vol.% | 25.7 Vol.% | 26.1 Vol.% |

| | | | | |
|---|---|---|---|---|
| ¹ OH-Zahl 100 mg KOH/g bezogen auf nichtflüchtige Anteile, 30 Gew.% in Butylacetat (Synthalat A-TS 3737, von Synthopol) ² OH-Zahl 245 mg KOH/g bezogen auf nichtflüchtige Anteile, 20 Gew.% in Butylacetat (Synthoester TS 1717, von Synthopol) ³ Zink-Aluminium-Phosphat (Phosphinal PZ04, von SNCZ) ⁴ Porengrösse 3Å (Sylosiv^{®} A 3, von Grace) ⁵ Dibutylzinndilaurat ⁶ HDI-Biuret 75 Gew.% in Lösemittel, 16.5 Gewichts-% NCO (inkl. Lösemittel, entspricht einem NCO-Gehalt von 22 Gew.% auf nichtflüchtige Anteile), NCO-Funktionalität ca. 3.8 (Desmodur^{®} N75 MPA/X, von Covestro) | | | | |

**Tabelle 2: Eigenschaften der Beispiele 1 bis 4. "n.b." steht für "nicht bestimmt"**

| **Beispiel** | | **1** | **2** | **3** | **4 (Vergleich)** |
|---|---|---|---|---|---|
| **Topfzeit** [h:min] NK: | | 0:35 | 1:30 | 0:40 | 3:30 |
| | 30°C/80% rF: | 0:25 | n.b. | 0:35 | 3:10 |
| **Aushärtung im NK:** (450 µm TSD ¹) | | glatte Oberfläche, keine Blasen | glatte Oberfläche, keine Blasen | glatte Oberfläche, keine Blasen | glatte Oberfläche, wenige kleine Blasen |
| | Aspekt: | | | | |
| | Haftzug: | 6.1 MPa² | n.b. | n.b. | 5.8 MPa 2 |
| 720 h KW | Haftzug: | 5.0 MPa 2 | n.b. | n.b. | 6.1 MPa 2 |
| 720 h SSN | Haftzug: | 6.3 MPa 2 | n.b. | n.b. | 6.4 MPa 2 |
| Unterrostung: | | 0.37 mm | n.b. | n.b. | 0.23 mm |
| **Aushärtung bei 30°C/80%rF:** (450 µm TSD ¹) | | glatte Oberfläche, -wenige kleine Blasen | glatte Oberfläche, wenige kleine Blasen | glatte Oberfläche, wenige kleine Blasen | unebene Oberfläche, viele grosse Blasen |
| | Aspekt: | | | | |
| Pendelhärte: | 1d | 12.6 s | n.b. | 12.6 s | 8.4 s |
| | 7d | 14.0 s | | 18.2 s | 9.8 s |
| | Haftzug: | 4.7 MPa² | n.b. | n.b. | 3.1 MPa 2 |
| 720 h KW | Haftzug: | 5.1 MPa² | n.b. | n.b. | 2.4 MPa ² |
| 720 h SSN | Haftzug: | 6.1 MPa ² | n.b. | n.b. | 3.8 MPa ² |
| | Unterrostung: | 0.43 mm | n.b. | n.b. | 3.5 mm |
| **Aushärtung bei 6°C/70%rF:** (450 µm TSD ¹) | | glatte Oberfläche, keine Blasen | n.b. | glatte Oberfläche, keine Blasen | glatte Oberfläche, einige kleine Blasen |
| | Aspekt: | | | | |
| | Haftzug: | 5.9 MPa ² | n.b. | n.b. | 5.7 MPa ² |
| 720 h KW | Haftzug: | 4.0 MPa ² | n.b. | n.b. | 4.5 MPa ² |
| 720 h SSN | Haftzug: | 6.0 MPa 2 | n.b. | n.b. | 6.7 MPa 2 |
| Unterrostung: | | 0.63 mm | n.b. | n.b. | 0.57 mm |
| **Zwischenhaftung:** | | | | | |
| TG6 | Haftzug: | 5.2 MPa 2 | n.b. | n.b. | n.b. |
| 7d NK | Haftzug: | 5.0 MPa ² | n.b. | n.b. | 4.1 MPa ² |

| | | | | | |
|---|---|---|---|---|---|
| ¹ Trockenschichtdicke ² kohäsives Bruchbild | | | | | |

Aus der Tabelle 2 ist ersichtlich, dass die erfindungsgemässen Beispiele 1 bis 3 bei allen geprüften Klimabedingungen in hoher Schichtdicke ohne Qualitätseinbussen aushärten, während das Vergleichsbeispiel 4 im feuchtwarmen Klima (30°C/80%rF) eine Beschichtung von stark verminderter Qualität mit ungenügender Festigkeit und ungenügenden Korrosionsschutz-Eigenschaften ausbildet.

## Patentansprüche

1. Korrosionsschutz-Beschichtung umfassend
- mindestens ein Polyisocyanat,
- mindestens ein Polyol P1 mit einer OH-Zahl im Bereich von 60 bis 300 mg KOH/g,
- mindestens ein Aldimin der Formel (I), 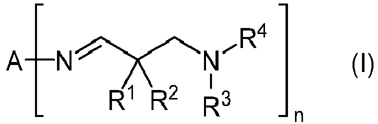 wobei
n für 2 oder 3 steht,
A für einen n-wertigen organischen Rest mit 2 bis 25 C-Atomen steht, R¹ und R² unabhängig voneinander für einen C₁ bis C₄ Alkylrest oder zusammen für einen C₄ bis C₆ Alkylenrest stehen, und
R³ und R⁴ unabhängig voneinander für einen gegebenenfalls Ether-Sauerstoff enthaltenden C₁ bis C₈ Alkylrest oder zusammen für einen gegebenenfalls Ether-Sauerstoff enthaltenden C₄ bis C₆ Alkylenrest stehen, und
- mindestens ein Korrosionsschutz-Pigment.

2. Korrosionsschutz-Beschichtung gemäss Anspruch 1, **dadurch gekennzeichnet, dass** sie eine erste und eine zweite Komponente umfasst, welche getrennt voneinander aufbewahrt und erst kurz vor oder während der Applikation vermischt werden, wobei das Polyol P1 ein Bestandteil der ersten und das Polyisocyanat ein Bestandteil der zweiten Komponente sind und das Aldimin der Formel (I) und das Korrosionsschutz-Pigment jeweils ein Bestandteil der ersten und/oder der zweiten Komponente sind.

3. Korrosionsschutz-Beschichtung gemäss einem der Ansprüche 1 bis 2, **dadurch gekennzeichnet, dass** das Polyisocyanat insgesamt eine mittlere NCO-Funktionalität im Bereich von 2.5 bis 4 und einen NCO-Gehalt von 15 bis 32 Gewichts-% aufweist.

4. Korrosionsschutz-Beschichtung gemäss einem der Ansprüche 1 bis 3, **dadurch gekennzeichnet, dass** das Polyisocyanat aliphatisch ist.

5. Korrosionsschutz-Beschichtung gemäss einem der Ansprüche 1 bis 4, **dadurch gekennzeichnet, dass** das Polyol P1 ausgewählt ist aus der Gruppe bestehend aus Polyacrylatpolyolen, Polyesterpolyolen, Polycarbonatpolyolen, Polycaprolactonpolyolen, Copolymeren dieser Polyole, Copolymeren dieser Polyole mit Polyetherpolyolen und Mischungen der genannten Polyole.

6. Korrosionsschutz-Beschichtung gemäss einem der Ansprüche 1 bis 5, **dadurch gekennzeichnet, dass** insgesamt 8 bis 22 Gewichts-% Polyole P1 bezogen auf die gesamte Beschichtung enthalten sind.

7. Korrosionsschutz-Beschichtung gemäss einem der Ansprüche 1 bis 6, **dadurch gekennzeichnet, dass** R¹ und R² jeweils für Methyl stehen und R³ und R⁴ zusammen für 3-Oxa-1,5-pentylen stehen und zusammen mit dem Stickstoffatom, an welches R³ und R⁴ gebunden sind, einen Morpholin-Ring bilden.

8. Korrosionsschutz-Beschichtung gemäss einem der Ansprüche 1 bis 7, **dadurch gekennzeichnet, dass** A für einen Rest ausgewählt aus der Gruppe bestehend aus 1,6-Hexylen, (1,5,5-Trimethylcyclohexan-1-yl)methan-1,3, 4,4'-Methylen-bis(cyclohexyl) und Trimethylolpropan- oder Glycerin-gestartetes Tris(ω-polyoxypropylen) mit einem mittleren Molekulargewicht Mₙ im Bereich von 330 bis 500 g/mol steht.

9. Korrosionsschutz-Beschichtung gemäss einem der Ansprüche 1 bis 8, **dadurch gekennzeichnet, dass** insgesamt 2.5 bis 10 Gewichts-%, bevorzugt 3 bis 7 Gewichts-%, Aldimine der Formel (I) bezogen auf die gesamte Beschichtung enthalten sind.

10. Korrosionsschutz-Beschichtung gemäss einem der Ansprüche 1 bis 9, **dadurch gekennzeichnet, dass** das Korrosionsschutz-Pigment ein Phosphor-haltiges Korrosionsschutz-Pigment ist.

11. Korrosionsschutz-Beschichtung gemäss einem der Ansprüche 1 bis 10, **dadurch gekennzeichnet, dass** insgesamt weniger als 18 Gewichts-% organische Lösemittel mit einem Siedepunkt von weniger als 200°C bei 1.013 bar bezogen auf die gesamte Beschichtung enthalten sind.

12. Korrosionsschutz-Beschichtung gemäss einem der Ansprüche 1 bis 11, **dadurch gekennzeichnet, dass**
- 8 bis 22 Gewichts-% Polyole P1,
- 2.5 bis 10 Gewichts-% Aldimine der Formel (I),
- 5 bis 20 Gewichts-% Korrosionsschutz-Pigmente,
- 3 bis 15 Gewichts-% Titandioxide,
- 20 bis 60 Gewichts-% Füllstoffe,
- 5 bis 17 Gewichts-% organische Lösemittel mit einem Siedepunkt von weniger als 200°C bei 1.013 bar,
- 7 bis 25 Gewichts-% Polyisocyanat, und
- 0 bis 10 Gewichts-% weitere Substanzen, insbesondere 0.5 bis 5 Gewichts-% Molekularsiebpulver,
bezogen auf die gesamte Beschichtung enthalten sind.

13. Verwendung der Korrosionsschutz-Beschichtung gemäss einem der Ansprüche 1 bis 12 für den Schutz von Metalloberflächen.

14. Verfahren zum Beschichten von mindestens einem Substrat, umfassend die Schritte
(i) gegebenenfalls Applizieren einer Grundierung,
(ii) Applizieren der vermischten Korrosionsschutz-Beschichtung gemäss einem der Ansprüche 1 bis 12 innerhalb der Topfzeit,
(iii) gegebenenfalls Wiederholen von Schritt (ii), und
(iv) gegebenenfalls Applizieren eines Topcoats auf die ausgehärtete Korrosionsschutz-Beschichtung.

15. Verfahren gemäss Anspruch 14, **dadurch gekennzeichnet, dass** Schritt (ii) in einem Arbeitsgang in einer Schichtdicke von mindestens 240 µm Trockenschichtdicke appliziert wird.

16. Verfahren gemäss Anspruch 15, **dadurch gekennzeichnet, dass** die ausgehärtete Beschichtung aus Schritt (ii) nach einer Aushärtung von 7 Tagen bei 30° C/80 % relativer Feuchtigkeit einen Haftzugwert von mindestens 4 MPa erreicht, bestimmt gemäss ISO 4624 bei einer Prüfgeschwindigkeit von 1 MPa/s.

17. Beschichtungssystem erhalten aus dem Verfahren gemäss einem der Ansprüche 14 bis 16, umfassend mindestens ein Metallsubstrat, mindestens eine Grundierung, die Korrosionsschutz-Beschichtung gemäss einem der Ansprüche 1 bis 12, insbesondere in einer Trockenschichtdicke im Bereich von 240 bis 1'000 µm, und gegebenenfalls mindestens einen Topcoat.
